# EUROPEAN PATENT SPECIFICATION

(11) **EP 3 403 803 B1**
(45) Date of publication and mention of the grant of the patent: **22.04.2020**
(21) Application number: 17380013.7
(22) Date of filing: 15.05.2017
(51) Int. Cl.: B29C 45/14, F16B 41/00, F16B 5/02, F16B 19/02

(54) **ASSEMBLY COMPONENT FOR RECEIVING A SHANK OF A FASTENER**
ANORDNUNG FÜR DEN SCHAFT EINER SCHRAUBE.
ENSEMBLE POUR RECEVOIR UNE TIGE DE FIXATION.

(43) Date of publication of application: 21.11.2018
(73) Proprietor: MANN + HUMMEL GMBH, 71636 Ludwigsburg (DE)
(72) Inventor: Juan, Antonio Cabanés Cacho, 50014 Zaragoza (ES); Jesús, Nuño Cortes, 50180 Utebo (ES); Jaime, Gracia Heras, 50018 Zaragoza (ES)
(74) Representative: Seyboth, Matthias

(56) References cited:
- EP-A1- 2 592 285
- EP-A1- 2 930 002
- EP-A2- 1 939 467
- DE-U1- 29 511 400
- US-A- 5 255 647
- US-A1- 2006 056 936

## Description

### Technical Field

The invention relates to an assembly component for receiving a shank of a fastener, particularly a thread of a fastener, particularly of a screw as well as a process of manufacturing such an assembly component.

### Prior Art

US 8,574,703 B2 discloses a method and an apparatus for positioning and assembly of two or more parts wherein at least one of which is of a creep sensitive material. The method and apparatus enable very precise positioning of parts during assembly by holding a rough alignment with free play permitting finer alignment. Creep resistant annular inserts are molded into the part and provided with flow apertures to conduct plastics material into the annular insert bore. A spindle defines the geometry of a centering hole within the bore during molding. The annular inserts are operable as compression limiters to prevent deformation of the creep sensitive material under the action of heat or tightening stresses.

US 2016/0069364 A1 discloses a captured fastener apparatus that includes at least one finger for securing various sizes of fasteners, including undersized or oversized fasteners. In forming the at least one finger, flow channels in a compression limiter allow a material, such as plastic, to flow from an outer portion of the compression limiter to a center of the compression limiter to form one or more angled fingers. According to US 2016/0069364 A1, an assembly component includes a body having a through aperture defined by an interior surface of the body for receiving the shank of a fastener, and at least one resilient finger projecting radially and axially into the aperture for engaging at a free end of the at least one finger the shank of the fastener, and wherein the free end is radially inwardly spaced from the interior surface for defining there between a radial gap that allows the free end to flex toward the interior surface for gripping and retaining the shank of the fastener in the aperture.

EP 1939467 A2 discloses a compression limiter having a tubular wall with a central passage and a plurality of perforations. A plastic component can be formed by overmolding a plastic body over the compression coupler and extending the plastic body into the plurality of perforations. Different sized fastener openings can be formed within the compression limiter by extending the plastic body into the central passage and/or preventing the plastic body from extending into the central passage.

EP 2592285A1 discloses a screw assembly element in a first part for attaching said first part to a second part using a screw. The assembly element comprises a sleeve arranged in a hole in said first part, the sleeve being cylindrical. At least a portion of said first part extends into the inside of the sleeve.

EP 2930002 A1 describes a fastener structure in which a cylindrical member is integrally embedded by insert-molding in a resin component and a screw member is inserted in an insertion hole provided on the inside of said cylindrical member.

DE 29511400 U1 discloses a fastener assembly for attaching a first body having a bore to a second body having a threaded bore. The fastener assembly comprises a screw with a shank having a threaded and an unthreaded part, a sleeve surrounding said shank and being axially shiftable, an elastomer component in which said sleeve is embedded and radially extending means formed by elastomer material extending through holes in the sleeve for securing the screw in the sleeve.

US 5255647 A describes an elastomeric grommet-fastener assembly comprising a fastener with clamping surface thereunder, a shank, and a reduced diameter entry portion; a washer member including a radial flange portion and an axially extending washer sleeve, which is telescopically positioned on the fastener shank; and an elastomeric grommet means having an axially extending sleeve portion and a radial rim portion extending laterally from an upper part of the sleeve portion. The molded grommet protrudes through holes in the washer sleeve such that the washer and grommet are held on the fastener shank.

US 20060056936 A discloses a fixing structure including a synthetic resin fixing part that is formed on a fixed member, a metallic collar adapted to be fixed in the portion to be fixed and having a bolt insertion hole and two engaging protrusions which are formed integrally with the fixing part so as to protrude into an interior of the bolt insertion hole. An inserted bolt is engaged with said protrusions, whereby the fixed member is provisionally fixed to the bolt. A nut is screwed on a distal end portion of the bolt.

### Disclosure of the Invention

It is an object of the invention to provide an assembly component for receiving a shank of a fastener, particularly as a cost effective assembly component which allows compact packaging.

Another object of the invention is to provide a process of manufacturing such an assembly component in a cost effective way.

One object of the invention is achieved by an assembly component for receiving a thread on a shank of a fastener according to claim 1.

Another object of the invention is achieved by a process of manufacturing an assembly component for receiving a thread on a shank of a fastener according to claim 7.

The other claims, the description and the drawings describe advantageous embodiments of the invention.

The assembly component comprises at least a body of molded plastics material, a bushing secured in the body, the bushing having a circumferential wall including an outer circumferential surface and an inner bore having a first diameter, wherein the bushing comprises at least a wall passage through the circumferential wall between the outer circumferential surface and the inner bore, wherein molded plastics material is extending through the at least one wall passage, wherein a segment of the molded plastics material is secured to an inner wall of the bushing, the segment extending axially within the inner bore over at least part of an axial length of the bushing, wherein the segment is connected to and formed by the molded plastics material extending through the wall passage, wherein at least one retention part is radially extending from the inner wall of the bushing in the inner bore of the body, wherein the retention part is connected to the segment, and wherein the bushing is molded with the body.

The process comprises at least providing a bushing to be overmolded with plastics material, for being secured in a body of molded plastics material, the bushing having a circumferential wall including an outer circumferential surface and an inner bore, wherein the bushing comprises at least a wall passage through the circumferential wall between the outer circumferential surface and the inner bore, performing the molding process, wherein the bushing is overmolded with plastics material to form the body, wherein molded plastics material is flowing through the at least one wall passage, wherein a segment is formed by the molded plastics material extending through the wall passage to an inner wall of the bushing, the segment extending axially within the inner bore over at least part of an axial length of the bushing, wherein at least one retention part is formed by the molded plastics material extending through the wall passage, the retention part radially extending from the inner wall inside the inner bore of the body for receiving the shank of the fastener, and wherein the retention part is connected to the segment.

According to a first aspect of the invention, an assembly component for receiving thread on a shank of a fastener is proposed, comprising at least a body of molded plastics material, comprising a bushing secured in the body, the bushing having a circumferential wall including an outer circumferential surface and an inner bore having a first diameter, wherein the bushing comprises at least a wall passage through the circumferential wall between the outer circumferential surface and the inner bore. Molded plastics material is extending through the at least one wall passage. A segment of the molded plastics material is secured to an inner wall of the bushing, the segment extending axially within the inner bore over at least part of an axial length of the bushing. The segment is connected to and formed by the molded plastics material extending through the wall passage. At least one retention part is radially extending from the inner wall of the bushing in the inner bore of the body. The retention part is connected to the segment. The bushing is molded with the body.

The inventive assembly component comprises one or more bushings which are overmolded on a plastics part with a partial layer of plastics material at the inner side of the bushing that has a small height versus the bushing height, which reduces the bushing diameter to hold the fastener. The fastener might be a screw which can be screwed into the plastics material and is thus fixed. The plastics material may get from an outer side of the bushing to the inner face of the bushing through passages in the wall of the bushing such as slits, slots or holes. Alternatively the plastics material may be injected into the inner face of the bushing and may thus flow to the outer side of the bushing through the wall passages. Injection of the plastics material on either side of the bushing may be performed in a manufacturing process such as injection molding with efficient tooling. With injection on an outer side of the bushing the plastics material forms the body first and flows through the wall passage to the inner bore to form the inner wall and the retention part, whereas with injection into the inner bore of the bushing the plastics material forms the inner wall and the retention part first and flows through the wall passage to the outer side of the bushing to form the body.

The fastener holding feature to the assembly component is added within the injection mold process of the part. A standard bushing may be used. Different fastener set ups may be performed with the same bushing. The retention part is formed by the molded plastics material extending through the wall passage. The retention part may be extending into the inner bore of the bushing at least on one side of the bushing. For instance, the retention part may be arranged as one or more separate projections radially extending into the inner bore.

The inventive solution is an improvement to have an additional feature on an overmolded bushing which allows a preassembly of fasteners to the body. The inventive assembly component thus exhibits advantages over solutions according to state of the art with special bushings that make the function of retention. The inventive assembly component is also advantageous over other solutions with long screws with the fixation feature on the screws.

The inventive assembly component allows to have preassembled fasteners to deliver, which may be useful for difficult assembly conditions on customer side, for example, hard access under the hood or two-hands assembly.

The inventive assembly component is made on molded plastics material and is cost effective because spare parts do not have special requirements.

Thus advantages of the inventive solution are that the inventive assembly component is more compact than assembly components for receiving a shank of a fastener according to state of the art. A screw as a typical fastener can be exchanged with a screw using the same metric. There are no additional requirements for the bushing. Requirements for the bushing are the same as for typical overmolded bushings.

The inventive assembly component allows for compact packaging of the component. There are no extra operations or components needed to manufacture the assembly component, only a standard molding process may be used. Therefore the assembly component is cost effective.

Low torque is needed to release the screw. Torque values to release the screw from the assembly component may typically range between 1 to 2 Nm. Screwing to a counterpart is feasible after release of the screw.

Using the inventive assembly component one might be able to deliver clean side ducts with turbo connection with preassembled fasteners for the customer at a challenging packaging and with a low cost to obtain a competitive solution. Due to the design, packaging offers really low volume. Due to the inventive solution the preassembly of the fastener is achieved by integrating the retention feature on the base volume of the part.

Thus an inventive solution for the preassembly of fasteners with a low cost and packaging impact is achieved. The inventive assembly component is cost effective due to spare parts and mold integration, only a pre-screw process is needed after demolding the part.

According to the invention, the retention part is formed by the molded plastics material extending through the wall passage. This allows forming the retention part and connecting the bushing to the body in one step.

According to an advantageous embodiment the bushing may extend in axial direction through a corresponding one of at least one opening in the body, having the axial length selected such that the bushing is operable as a compression limiter. Thus the bushing is able to support the fastener on one side when screwed into a counterpart, whereas the bushing itself is supported by the counterpart. By this way the compression of the body of the assembly component which is made from plastics material may be limited by the bushing wall.

According to an advantageous embodiment the bushing may be open at opposing sides of the body. Thus the bushing serves for receiving a fastener by inserting the fastener on one side whereas the other side might be screwed into a counterpart.

The retention part is located on one of the opposing sides of the body. The retention part serves for fixing the shank of the fastener, particularly a thread of a screw. Therefore the retention part is arranged in the inner bore of the bushing, on one of the opposing sides of the body in order to be able to screw the fastener into the retention part in an easy way. The retention part may be extending into the inner bore of the bushing on one side of the bushing. The retention part may be arranged as one or more separate projections radially extending into the inner bore. Alternatively, the retention part may be configured as a ring.

According to an advantageous embodiment the retention part, the bushing and the body may be arranged to exhibit a common flat surface on at least one side of the body. By this way mounting a fastener to the assembly component and fixing it into a counterpart on the other side of the assembly component may easily be performed. The compression limiting effect of the assembly component by the bushing may be achieved in a reliable manner. Precise positioning of the assembly component is possible.

According to an advantageous embodiment the wall passage may be at least one of a through orifice, a recess formed in an end face of the bushing, a slot, or a slit emanating at least partially in axial direction from one end of the bushing in the circumferential wall. By each of these openings in the wall of the bushing the plastics material might flow in the molding process through the wall passage in order to form the segment and the retention part in the desired way. A slit may be a very convenient way of implementing the wall recess in the case of using a slit rolled metal band as the bushing.

According to an advantageous embodiment the bushing may comprise a slit rolled metal band. Such a slit rolled metal band is a very cost effective way of realizing a bushing with metallic walls and serves for delivering the wanted stability and strength for a limitation of the compression from the fastener in the body manufactured from molded plastics material.

According to the invention, a bore is formed inside the retention part sized to receive the shank of the fastener. The shank of the fastener as a thread of a screw may easily be fixed to the assembly component by screwing the thread into the retention part.

The bore of the retention part is sized to receive a thread of the fastener, when screwed into the retention part. By this way the tread of the screw may be driven into the retention part in a self-cutting manner. Thus the fastener is fixed by pre-assembly to the assembly component which enables handling in the assembly phase of aggregates.

According to another aspect of the invention, a process of manufacturing an assembly component for receiving a thread on a shank of a fastener, is proposed. The process comprises at least providing a bushing to be overmolded with plastics material, for being secured in a body of molded plastics material, the bushing having a circumferential wall including an outer circumferential surface and an inner bore, wherein the bushing comprises at least a wall passage through the circumferential wall between the outer circumferential surface and the inner bore, performing the molding process, wherein the bushing is overmolded with plastics material to form the body. Molded plastics material is flowing through the at least one wall passage. A segment is formed by the molded plastics material extending through the wall passage to an inner wall of the bushing, the segment extending axially within the inner bore over at least part of an axial length of the bushing. At least one retention part is formed by the molded plastics material extending through the wall passage, the retention part radially extending from the inner wall inside the inner bore of the body for receiving the shank of the fastener. The retention part is connected to the segment.

The inventive assembly component comprises one or more bushings which are overmolded on a plastics part with a partial layer of plastics material at the inner side of the bushing that has a small height versus the bushing height, which reduces the bushing diameter to hold the fastener. The fastener might be a screw which can be screwed into the plastics material and is thus fixed. The plastics material may get from an outer side of the bushing to the inner face of the bushing through passages in the wall of the bushing such as slits, slots or holes. Alternatively the plastics material may be injected into the inner face of the bushing and may thus flow to the outer side of the bushing through the wall passages. Injection of the plastics material on either side of the bushing may be performed in a manufacturing process such as injection molding with efficient tooling. With injection on an outer side of the bushing the plastics material forms the body first and flows through the wall passage to the inner bore to form the inner wall and the retention part, whereas with injection into the inner bore of the bushing the plastics material forms the inner wall and the retention part first and flows through the wall passage to the outer side of the bushing to form the body.

The fastener holding feature to the assembly component may be added within the injection mold process of the part. A standard bushing may be used. Different fastener set ups may be performed with the same bushing.

According to an advantageous embodiment the wall passage may be at least one of a through orifice, a recess formed in an end face of the bushing, a slot, or a slit emanating at least partially in axial direction from one end of the bushing in the circumferential wall. By each of these openings in the wall of the bushing the plastics material might flow in the molding process through the wall passage in order to form the segment and the retention part in the desired way. A slit may be a very convenient way of implementing the wall recess in the case of using a slit rolled metal band as the bushing.

### Brief Description of the Drawings

The present invention together with the above-mentioned and other objects and advantages may best be understood from the following detailed description of the embodiments, but not restricted to the embodiments, wherein is shown in:
- Figure 1: a sectional view of an assembly component for receiving a shank of a fastener, particularly a thread of a fastener, according to an embodiment of the invention;
- Figure 2: an isometric view of the assembly component according to an example embodiment with a mounted screw;
- Figure 3: a sectional view of the assembly component with a mounted screw shown in Fig. 2.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

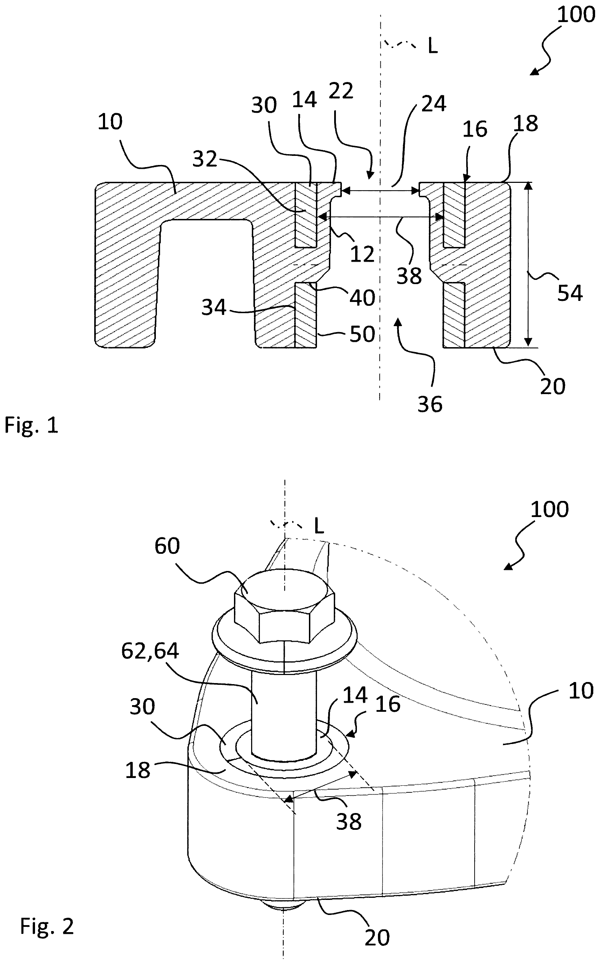

Figure 1 depicts a sectional view of an assembly component 100 for receiving a shank 62 of a fastener 60, particularly a thread 64 of a fastener 60, according to an embodiment of the invention. The assembly component 100 comprises the body 10 manufactured from molded plastics material. The body 10 comprises the bushing 30 which is secured in the body 10 by overmolding with plastics material. The bushing 30 consists of a circumferential wall 32 including an outer circumferential surface 34 and an inner bore 36 of a first diameter 38. The bushing 30 comprises two opposing wall passages 40 through the circumferential wall 32 between the outer circumferential surface 34 and the inner bore 36 where molded plastics material is extending through the wall passages 40 between the outer circumferential surface 34 and the inner bore 36. The segment 12 of molded plastics material is secured to the inner wall 50 of the bushing 30. The segment 12 extends axially within the inner bore 36 over the upper part of the axial length 54 of the bushing 30. The segment 12 is connected to and formed by the molded plastics material extending through the wall passage 40. The retention part 14 is radially extending from the inner wall 50 of the bushing 30 in the inner bore 36 of the body 10. The retention part 14 is connected to the segment 12 and also formed by the molded plastics material extending through the wall passage 40. The retention part 14 may be formed as a circular collar around the inner bore 36 of the bushing in order to receive the thread 64 of a screw 60, as shown in Figure 2. The bushing 30 is molded with the body 10 in a molding process.

The process of manufacturing the assembly component 100 thus comprises providing a bushing 30 to be overmolded with plastics material for being secured in the body 10 of molded plastics material. The molding process is performed, wherein the bushing 30 is overmolded with plastics material to form the body 10. Molded plastics material is flowing through the wall passages 40 from the outer circumferential surface 34 into the inner bore 36. Alternatively the plastics material may be injected into the inner bore 36 and may flow through the wall passages 40 to the outer circumferential surface 34, thus forming the body 10. The segment 12 is formed by the molded plastics material extending between the wall passage 40 and the inner wall 50 of the bushing 30, thus that the segment 12 extends axially within the inner bore 36 over at least part of an axial length 54 of the bushing 30. The retention part 14 is also formed by the molded plastics material extending through the wall passage 40, thereby the retention part 14 is connected to the segment 12 as one part.

The bushing 30 may advantageously comprise a slit rolled metal band, which exhibits a cost effective way to manufacture a bushing 30. The wall passage 40 may be represented in the metal wall of the bushing 30 by a through orifice, a recess formed in an end face of the bushing 30, or a slot. According to the embodiment of Figure 1 the wall passages 40 are holes in the wall 32 of the bushing 30.

As can be seen in Figure 1, the bushing 30 extends in axial direction L through an opening 16 in the body 10. The axial length 54 of the bushing 30 is selected such that the bushing 30 is operable as a compression limiter when a screw is fed through the inner bore 36 of the bushing 30 and fixed to a counterpart, thus supported by the bushing 30 when screwed with a given torque to the counterpart. In order to be able to feed through a screw 60, the bushing is open at opposing sides 18, 20 of the body 10. The screw 60 may be prefixed in the retention part 14 by screwing it in a self-cutting manner to the retention part 14, whereas for this purpose the retention part 14 may be located on either of the opposing sides 18, 20 of the body 10. For this purpose a bore 22 is formed inside the retention part 14 sized to receive the shank 62, particularly the thread 64 of the fastener 60. Advantageously the bore 22 of the retention part 14 is sized to receive the thread 64 of the fastener 60, when screwed into the retention part 14.

The retention part 14, the bushing 30 and the body 10 are arranged to exhibit a common flat surface on at least one side 18, 20 of the body 10. Thus a compact and easy to mount assembly component is achieved.

Figure 2 depicts an isometric view of the assembly component 100 according to an example embodiment with a mounted screw 60. In the isometric view the bushing 30, which is positioned in the opening 16 of the assembly component 100, is overmolded in the assembly component 100. A slit in the wall 32 of the bushing 30 indicates that it might be manufactured from a slit metal band. The retention part 14 which is to be seen as a circular collar around the inner bore 36 inside the bore diameter 38 receives the thread 64 of the screw 60, which is screwed into the retention part 14 and thus fixed to the assembly part 100 in a pre-assembly process.

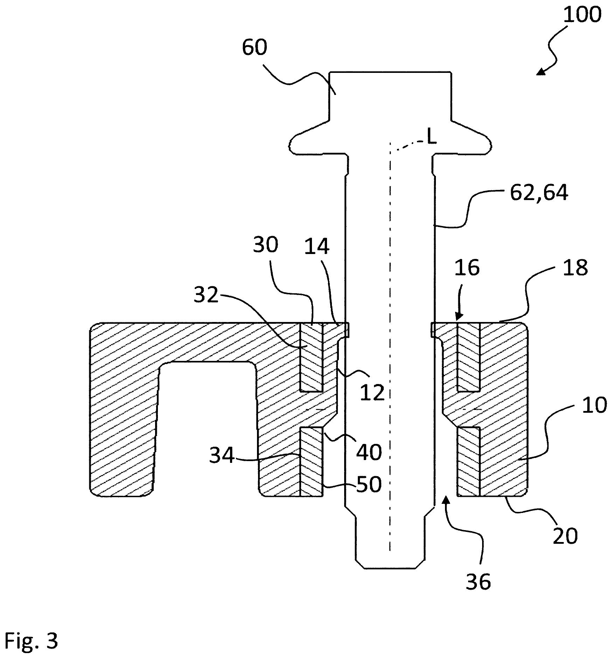

Figure 3 depicts a sectional view of the assembly component 100 with the mounted screw 60 shown in Fig. 2. As can be seen the thread 64 of the screw 60 is engaged in the retention part 14 as is the case when it is screwed into the retention part 14. Thus the screw 60 is fixed to the assembly component 100 in a pre-assembly process. Because the retention part 14 is arranged on the upper side 18 of the assembly component 100 and the bushing 30 the shank 62 of the screw 60 is only fixed to the assembly component 100 on the small axial length where the thread 64 is engaged with the retention part 14. The screw 60 is thus fixed inside the bushing 30 by the thread 64 engaged with the retention part 14. The screw 60 projects on the other side 20 of the body 10 of the assembly component 100. Yet it is also possible that the screw 60 is premounted and not projecting on the other side 20 of the body 10 which enables comfortable handling conditions for storage and assembly processes.

As the retention part 14 is made from mold plastics material which might be elastic to a certain amount the screw 60 may be tilted by some degrees which may enable the feeding of the screw 60 into a bore of a counterpart (which is not shown in Figure 3) to be fixed. Thus the mounting process of the assembly component 100 to the counterpart can be performed in a more easy way than if the screw 60 would be more rigidly fixed to the assembly component 100. When tightening the screw 60 the bushing 30 may serve for limiting compression of the body 10 of the assembly component 100 made from molded plastics material.

## Claims

1. An assembly component (100) for receiving a thread (64) on a shank (62) of a fastener (60), comprising at least
- a body (10) of molded plastics material having two opposing sides (18, 20), comprising
- a bushing (30) secured in the body (10), the bushing (30) having a circumferential wall (32) including an outer circumferential surface (34) and an inner bore (36) having a first diameter (38), wherein the bushing (30) comprises at least a wall passage (40) through the circumferential wall (32) extending between the outer circumferential surface (34) and the inner bore (36),
wherein molded plastics material is extending through the at least one wall passage (40),
wherein a segment (12) of the molded plastics material is secured to an inner wall (50) of the bushing (30), the segment (12) extending axially within the inner bore (36) over at least part of an axial length (54) of the bushing (30),
wherein the segment (12) is connected to and formed by the molded plastics material extending through the wall passage (40),
wherein at least one retention part (14) is radially extending from the inner wall (50) of the bushing (30) and the segment (12) into the inner bore (36) of the body (10), wherein the retention part (14) is connected to the segment (12),
wherein the retention part (14) is formed as a circular collar around the inner bore (36) and is located on an upper side (18) of the body (10) which is the side which receives the fastener (60),
wherein the bushing (30) is molded with the body (10),
wherein the retention part (14) is formed by the molded plastics material extending through the wall passage (40), wherein a bore (22) is formed in the retention part (14), which is sized to receive the thread (64) on the shank (62) of the fastener (60), when screwed into the retention part (14), such that the shank (62) of the screw (60) is only fixed to the assembly component (100) on the small axial length where the thread (64) is engaged with the retention part (14).

2. The assembly component according to claim 1, wherein the bushing (30) extends in axial direction (L) through a corresponding one of at least one opening (16) in the body (10), having the axial length (54) selected such that the bushing (30) is operable as a compression limiter.

3. The assembly component according to any one of the preceding claims, wherein the bushing is open at opposing sides (18, 20) of the body (10).

4. The assembly component according to any one of the preceding claims, wherein the retention part (14), the bushing (30) and the body (10) are arranged to exhibit a common flat surface on at least one side (18, 20) of the body (10).

5. The assembly component according to any one of the preceding claims, wherein the wall passage (40) is at least one of
- a through orifice,
- a recess formed in an end face of the bushing (30),
- a slot,
- a slit emanating at least partially in axial direction from one end of the bushing (30) in the circumferential wall (32).

6. The assembly component according to any one of the preceding claims, wherein the bushing (30) comprises a slit rolled metal band.

7. A process of manufacturing an assembly component (100) for receiving a thread (64) on a shank (62) of a fastener (60), the process comprising at least
- providing a bushing (30) to be overmolded with plastics material for being secured in a body (10) of molded plastics material, the bushing (30) having a circumferential wall (32) including an outer circumferential surface (34) and an inner bore (36), wherein the bushing (30) comprises at least a wall passage (40) through the circumferential wall (32) extending between the outer circumferential surface (34) and the inner bore (36),
- performing the molding process, wherein the bushing (30) is overmolded with plastics material to form the body (10),
wherein molded plastics material is flowing through the at least one wall passage (40),
wherein a segment (12) is formed by the molded plastics material extending through the wall passage (40) to an inner wall (50) of the bushing (30), the segment (12) extending axially within the inner bore (36) over at least part of an axial length (54) of the bushing (30),
wherein at least one retention part (14) is formed on an upper side (18) of the body (10), which is the side which receives the fastener (60), by the molded plastics material extending through the wall passage (40), the retention part (14) being formed as a circular collar around the inner bore (36) and radially extending from the inner wall (50) inside the inner bore (36) of the body (10) and having a bore for receiving the thread (64) on the shank (62) of the fastener (60),
wherein the retention part (14) is connected to the segment (12) and extending radially from the segment (12).

8. The process according to claim 7, wherein the wall passage (40) is at least one of
- a through orifice,
- a recess formed in an end face of the bushing (30),
- a slot,
- a slit emanating at least partially in axial direction from one end of the bushing (30) in the circumferential wall (32).

## Patentansprüche

1. Montageteil (100) zur Aufnahme eines Gewindes (64) auf einem Schaft (62) eines Befestigungselementes (60), umfassend wenigstens
- einen Körper (10) aus geformtem Kunststoff mit zwei gegenüberliegenden Seiten (18, 20), umfassend
- eine in dem Körper (10) befestigte Buchse (30), wobei die Buchse (30) eine Umfangswand (32) mit einer äußeren Mantelfläche (34) und einer inneren Bohrung (36) mit einem ersten Durchmesser (38) hat, wobei die Buchse (30) wenigstens einen Wanddurchlass (40) durch die Umfangswand (32) umfasst, der sich zwischen der äußeren Mantelfläche (34) und der inneren Bohrung (36) erstreckt,
wobei sich der geformte Kunststoff durch den wenigstens einen Wanddurchlass (40) erstreckt,
wobei ein Segment (12) des geformten Kunststoffs an einer Innenwand (50) der Buchse (30) befestigt ist, wobei sich das Segment (12) axial innerhalb der Innenbohrung (36) über wenigstens einen Teil einer axialen Länge (54) der Buchse (30) erstreckt,
wobei das Segment (12), das sich durch den Wanddurchlass (40) erstreckt, mit dem geformten Kunststoff verbunden und durch dieses gebildet ist,
wobei sich wenigstens ein Halteteil (14) radial von der Innenwand (50) der Buchse (30) und dem Segment (12) in die Innenbohrung (36) des Körpers (10) erstreckt,
wobei das Halteteil (14) mit dem Segment (12) verbunden ist,
wobei das Halteteil (14) als kreisförmiger Kragen um die Innenbohrung (36) herum ausgebildet ist und sich auf einer Oberseite (18) des Körpers (10) befindet, welche die Seite ist, die das Befestigungselement (60) aufnimmt, wobei die Buchse (30) mit dem Körper (10) geformt ist,
wobei das Halteteil (14), das sich durch den Wanddurchlass (40) erstreckt, durch den geformten Kunststoff gebildet wird, wobei eine Bohrung (22) im Halteteil (14) ausgebildet ist, die so bemessen ist, dass sie das Gewinde (64) auf dem Schaft (62) des Befestigungselements (60) aufnimmt, wenn es in das Halteteil (14) eingeschraubt wird, so dass der Schaft (62) der Schraube (60) nur an dem Montageteil (100) auf der kleinen axialen Länge befestigt ist, wo das Gewinde (64) mit dem Halteteil (14) in Eingriff steht.

2. Montageteil nach Anspruch 1, wobei sich die Buchse (30) in axialer Richtung (L) durch eine entsprechende von wenigstens einer Öffnung (16) in dem Körper (10) erstreckt, wobei die axiale Länge (54) so gewählt ist, dass die Buchse (30) als Kompressionsbegrenzer betriebsbereit ist.

3. Montageteil nach einem der obigen Ansprüche, wobei die Buchse an gegenüberliegenden Seiten (18, 20) des Körpers (10) offen ist.

4. Montageteil nach einem der obigen Ansprüche, wobei das Halteteil (14), die Buchse (30) und der Körper (10) so angeordnet sind, dass sie eine gemeinsame flache Oberfläche auf wenigstens einer Seite (18, 20) des Körpers (10) aufweisen.

5. Montageteil nach einem der obigen Ansprüche, wobei der Wanddurchlass (40) wenigstens einer der folgenden ist
- eine Durchgangsöffnung,
- eine in einer Stirnseite der Buchse (30) ausgebildete Ausnehmung,
- eine Kerbe,
- ein Schlitz, der wenigstens teilweise in axialer Richtung von einem Ende der Buchse (30) in der Umfangswand (32) ausgeht.

6. Montageteil nach einem der obigen Ansprüche, wobei die Buchse (30) ein geschlitztes gewalztes Metallband umfasst.

7. Verfahren zur Herstellung eines Montageteils (100) zur Aufnahme eines Gewindes (64) auf einem Schaft (62) eines Befestigungselementes (60), das Verfahren umfassend wenigstens
- Bereitstellen einer Buchse (30), die mit Kunststoff umspritzt wird, um in einem Körper (10) aus geformtem Kunststoff befestigt zu werden, wobei die Buchse (30) eine Umfangswand (32) mit einer äußeren Mantelfläche (34) und einer inneren Bohrung (36) hat, wobei die Buchse (30) wenigstens einen Wanddurchlass (40) durch die Umfangswand (32) umfasst, der sich zwischen der äußeren Mantelfläche (34) und der inneren Bohrung (36) erstreckt,
- Durchführen des Formgebungsverfahrens, wobei die Buchse (30) mit Kunststoff umspritzt wird, um den Körper (10) zu formen,
wobei der geformte Kunststoff durch den wenigstens einen Wanddurchlass (40) fließt,
wobei ein Segment (12) durch den geformten Kunststoff gebildet wird, der sich durch den Wanddurchlass (40) zu einer Innenwand (50) der Buchse (30) erstreckt, wobei sich das Segment (12) axial innerhalb der Innenbohrung (36) über wenigstens einen Teil einer axialen Länge (54) der Buchse (30) erstreckt, wobei wenigstens ein Halteteil (14) auf einer Oberseite (18) des Körpers (10), welche die Seite ist, die das Befestigungselement (60) aufnimmt, durch den geformten Kunststoff gebildet wird, der sich durch den Wanddurchlass (40) erstreckt, wobei der Halteteil (14) als kreisförmiger Kragen um die Innenbohrung (36) herum ausgebildet ist und sich radial von der Innenwand (50) innerhalb der Innenbohrung (36) des Körpers (10) erstreckt und eine Bohrung zur Aufnahme des Gewindes (64) am Schaft (62) des Befestigungselements (60) hat,
wobei der Halteteil (14) mit dem Segment (12) verbunden ist und sich radial von dem Segment (12) erstreckt.

8. Verfahren nach Anspruch 7, wobei der Wanddurchlass (40) wenigstens einer der folgenden ist
- eine Durchgangsöffnung,
- eine in einer Stirnseite der Buchse (30) ausgebildete Ausnehmung,
- eine Kerbe,
- ein Schlitz, der wenigstens teilweise in axialer Richtung von einem Ende der Buchse (30) in der Umfangswand (32) ausgeht.

## Revendications

1. Composant d'assemblage (100) pour recevoir un filet (64) sur une tige (62) d'un élément de fixation (60), comprenant au moins
- un corps (10) de matière plastique moulée ayant deux côtés opposés (18, 20), comprenant
- une douille (30) fixée dans le corps (10), la douille (30) ayant une paroi circonférentielle (32) incluant une surface circonférentielle externe (34) et un alésage interne (36) ayant un premier diamètre (38), dans lequel la douille (30) comprend au moins un passage de paroi (40) à travers la paroi circonférentielle (32) s'étendant entre la surface circonférentielle externe (34) et l'alésage interne (36),
dans lequel la matière plastique moulée s'étend à travers le passage de paroi (40), au moins au nombre d'un,
dans lequel un segment (12) de la matière plastique moulée est fixé à une paroi interne (50) de la douille (30), le segment (12) s'étendant axialement au sein de l'alésage interne (36) sur au moins une partie d'une longueur axiale (54) de la douille (30),
dans lequel le segment (12) est relié à et formé par la matière plastique moulée s'étendant à travers le passage de paroi (40),
dans lequel au moins une partie de retenue (14) s'étend radialement à partir de la paroi interne (50) de la douille (30) et du segment (12) dans l'alésage interne (36) du corps (10),
dans lequel la partie de retenue (14) est reliée au segment (12),
dans lequel la partie de retenue (14) est formée en tant que collier circulaire autour de l'alésage interne (36) et se situe sur un côté supérieur (18) du corps (10) qui est le côté qui reçoit l'élément de fixation (60),
dans lequel la douille (30) est moulée avec le corps (10),
dans lequel la partie de retenue (14) est formée par la matière plastique moulée s'étendant à travers le passage de paroi (40), dans lequel un alésage (22) est formé dans la partie de retenue (14), lequel est dimensionné pour recevoir le filet (64) sur la tige (62) de l'élément de fixation (60), lorsqu'il est vissé dans la partie de retenue (14), de sorte que la tige (62) de la vis (60) est uniquement fixée au composant d'assemblage (100) sur la petite longueur axiale où le filet (64) est en prise avec la partie de retenue (14).

2. Composant d'assemblage selon la revendication 1, dans lequel la douille (30) s'étend en direction axiale (L) à travers une correspondante parmi au moins une ouverture (16) dans le corps (10), ayant la longueur axiale (54) sélectionnée de sorte que la douille (30) est exploitable en tant que limiteur de compression.

3. Composant d'assemblage selon l'une quelconque des revendications précédentes, dans lequel la douille est ouverte au niveau de côtés opposés (18, 20) du corps (10).

4. Composant d'assemblage selon l'une quelconque des revendications précédentes, dans lequel la partie de retenue (14), la douille (30) et le corps (10) sont agencés pour présenter une surface plate commune sur au moins un côté (18, 20) du corps (10).

5. Composant d'assemblage selon l'une quelconque des revendications précédentes, dans lequel le passage de paroi (40) est au moins l'un parmi
- un orifice traversant,
- un évidement formé dans une face d'extrémité de la douille (30),
- une encoche,
- une fente émanant au moins partiellement en direction axiale à partir d'une extrémité de la douille (30) dans la paroi circonférentielle (32).

6. Composant d'assemblage selon l'une quelconque des revendications précédentes, dans lequel la douille (30) comprend une bande métallique laminée fendue.

7. Procédé de fabrication d'un composant d'assemblage (100) pour recevoir un filet (64) sur une tige (62) d'un élément de fixation (60), le procédé comprenant au moins
- la fourniture d'une douille (30) à surmouler avec une matière plastique pour être fixée dans un corps (10) de matière plastique moulée, la douille (30) ayant une paroi circonférentielle (32) incluant une surface circonférentielle externe (34) et un alésage interne (36), dans lequel la douille (30) comprend au moins un passage de paroi (40) à travers la paroi circonférentielle (32) s'étendant entre la surface circonférentielle externe (34) et l'alésage interne (36),
- la mise en oeuvre du procédé de moulage, dans lequel la douille (30) est surmoulée avec une matière plastique pour former le corps (10),
dans lequel la matière plastique moulée s'écoule à travers le passage de paroi (40), au moins au nombre d'un,
dans lequel un segment (12) est formé par la matière plastique moulée s'étendant à travers le passage de paroi (40) jusqu'à une paroi interne (50) de la douille (30), le segment (12) s'étendant axialement au sein de l'alésage interne (36) sur au moins une partie d'une longueur axiale (54) de la douille (30), dans lequel au moins une partie de retenue (14) est formée sur un côté supérieur (18) du corps (10), qui est le côté qui reçoit l'élément de fixation (60), par la matière plastique moulée s'étendant à travers le passage de paroi (40), la partie de retenue (14) étant formée en tant que collier circulaire autour de l'alésage interne (36) et s'étendant radialement à partir de la paroi interne (50) à l'intérieur de l'alésage interne (36) du corps (10) et ayant un alésage pour recevoir le filet (64) sur la tige (62) de l'élément de fixation (60),
dans lequel la partie de retenue (14) est reliée au segment (12) et s'étend radialement à partir du segment (12).

8. Procédé selon la revendication 7, dans lequel le passage de paroi (40) est au moins l'un parmi
- un orifice traversant,
- un évidement formé dans une face d'extrémité de la douille (30),
- une encoche,
- une fente émanant au moins partiellement en direction axiale à partir d'une extrémité de la douille (30) dans la paroi circonférentielle (32).
